Europäisches Patentamt

European Patent Office

Office européen des brevets

(19)

(11) Veröffentlichungsnummer: 0 212 187

A1

# (12) EUROPÄISCHE PATENTANMELDUNG

(21) Anmeldenummer: 86109181.7

(22) Anmeldetag: 04.07.86

(51) Int. Cl.4: **B27K 3/52**

(30) Priorität: 12.07.85 DE 3524854

(43) Veröffentlichungstag der Anmeldung:
04.03.87 Patentblatt 87/10

(84) Benannte Vertragsstaaten:
AT BE CH DE FR GB IT LI NL SE

(71) Anmelder: Dr. Wolman GmbH
Dr.-Wolman-Strasse 31-33
D-7573 Sinzheim(DE)

(72) Erfinder: Marx, Hans-Norbert
Mozartweg 8
D-7580 Buehl-Weitenung(DE)
Erfinder: Mendela, Peter
Fichtenstrasse 4
D-7507 Pfinztal(DE)
Erfinder: Stanek, Richard Theodor, Dr.
Wuermersheimer Strasse 35
D-7552 Durmersheim(DE)
Erfinder: Ketterer, Michael
Kesslerstrasse 11
D-7500 Karlsruhe(DE)

(74) Vertreter: Schweiss, Werner, Dr. et al
BASF Aktiengesellschaft Patentabteilung
Carl-Bosch-Strasse 38
D-6700 Ludwigshafen(DE)

(54) Konservierungsmittel für Hobelspäne.

(57) Konservierungsmittel für Hobelspäne, insbesondere für eine Reithalle, enthaltend eine Mischung aus 1 bis 5 Gewichtsteilen einer anorganischen Borverbindung, 2 bis 7 Gewichtsteilen einer Alkoholverbindung und 1 bis 8 Gewichtsteilen einer wäßrigen Polymerdispersion und Verfahren zur Konservierung von Hobelspänen mit diesem Mittel.

EP 0 212 187 A1

## Konservierungsmittel für Hobelspäne

Gegenstand der Erfindung ist ein Konservierungsmittel für Hobelspäne, insbesondere für Hobelspäne, die als Einstreu in Reithallen verwendet werden.

Die Erfindung betrifft Hobelspäne der üblicherweise technisch verwerteten Holzarten (z.B. Fichte, Buche, Eiche, Kiefer).

Durch die klimatischen Verhältnisse bedingt, findet ein großer Teil des Pferdesports in Hallen - (Reithallen) statt. Die Böden dieser Hallen werden den Bedürfnissen des Pferdesports wie folgt angepaßt: Auf einen gut verdichteten Hallengrund wird eine 3 bis 5 cm starke Sandschicht eingebracht, auf diese kommt eine 10 bis 15 cm starke Einstreu aus Hobelspänen. Damit entsteht eine 13 bis 20 cm starke Tretschicht, die den Pferden genügend Halt bietet, auch bei großen Hochweit-Sprüngen. Diese optimalen Eigenschaften der Tretschicht bleiben aber nur kurze Zeit erhalten. Unter der Beanspruchung durch die Tritte der Pferde werden die mechanischen und biologischen Eigenschaften der Tret-schicht schnell schlechter. Als Folge davon befinden sich im Sommer Pferd und Reiter zumeist in einer Staubwolke, an den Stellen des Hallenbodens, wo sich die Pferde am häufigsten bewegen, die daher auch am stärksten strapaziert werden.(Hufschlag), wird die Tretschicht schnell steinhart, im Winter bei Frost gefriert die ganze Tretschicht und ist dann steinhart und im Sommer erfolgt durch die hohe Temperatur und hohe Feuchtigkeit an den Stellen der Tretschicht, wo die Pferde ihren Kot und Harn absetzen, eine starke Verrottung der Hobelspäne.

Durch übliche Zusätze von anorganischen Salzen, wie Kalziumchlorid, Kupfersulfat, Magnesiumsulfat oder zinnorganischen Verbindungen, z.B. Tributylzinnacetat, kann die Verrottung gestoppt werden. Nachteilig ist dabei die starke hautreizende Wirkung sowohl der anorganischen Salze wie auch der zinnorganischen Verbindungen. Auf derart präparierten Hallenböden können die kleinsten Hautabschürfungen an den Pferdefesseln zu Entzündungen führen.

Es wurde gefunden, daß ein Koservierungsmittel für Hobelspäne, insbesondere ein wasserverdünnbares Konservierungsmittel, das eine Mischung aus 1 bis 5, insbesondere 2 bis 3, Gewichtsteilen einer anorganischen Borverbindung, 2 bis 7, insbesondere 3 bis 5, Gewichtsteilen einer Alkoholverbindung und 1 bis 8, insbesondere 4 bis 6, Gewichtsteilen einer wäßrigen Polymerdispersion enthält, diese Nachteile nicht hat.

Eine anorganische Borverbindung ist beispielsweise Borsäure und ihre wasserlöslichen Salze oder ein Polyborat, z.B. Borax oder Timbor.

Eine Alkoholverbindung ist beispielsweise eine über 180°C siedende Alkoholverbindung, insbesondere eine im Bereich von 200 bis 350°C siedende Alkoholverbindung, z.B. ein einwertiger Alkohol wie Isodecanol, ein mehrwertiger Alkohol wie Glyzerin oder Propylenglykol, insbesondere Dipropylenglykol, ein Glykolether wie Ethylenglykolmonophenylether, Triethylenglykol-monoethylether oder Triethylenglykol-monobutylether.

Eine wäßrige Polymerdispersion ist beispielsweise eine Dispersion eines Homopolymeren, wie Polyvinylacetat oder Polyacrylsäureester, eines Copolymeren wie Polystyrolacrylat oder Polyvinylpropionat-acrylat, eines Terpolymeren wie Polyethylen-Vinylchlorid-Vinylacetat.

Das erfindungsgemäße Konservierungsmittel soll anhand folgender Beispiele erläutert werden:

Beispiel 1

| | |
|---|---|
| Borsäure | 2 Gewichtsteile |
| Dipropylenglykol | 4 Gewichtsteile |
| Acrylsäure-Copolymerisat-Dispersion | 5 Gewichtsteile |

Beispiel 2

| | |
|---|---|
| Timbor ($Na_2B_8O_{13} \cdot 4\ H_2O$) | 2 Gewichtsteile |
| Glyzerin | 3 Gewichtsteile |
| Vinylacetat-Dispersion | 5 Gewichtsteile |

Beispiel 3

| | |
|---|---|
| Borax ($Na_2B_4O_7 . 10\ H_2O$) | 2 Gewichtsteile |
| Triethylenglykol-monoethylether | 4 Gewichtsteile |
| Styrolacrylat-Dispersion | 4 Gewichtsteile |

Man verwendet zweckmäßig 5 bis 20 Gewichtsprozent Konservierungsmittel, bezogen auf trockene Hobelspäne bzw. 4 bis 16 kg Konservierungsmittel je m³ Hobelspäne.

Zwecks besserer Verteilung kann das Konservierungsmittel vor dem Aufbringen auf die Hobelspäne mit Wasser im Verhältnis Konservierungsmittel:Wasser wie 1:1 bis 1:49 Gewichtsteile verdünnt werden.

Das Konservierungsmittel kann den Hobelspänen vor oder nach dem Ausbringen der Tretschicht beigemischt werden. Vorteilhaft wird es auf die Tretschicht gleichmäßig versprüht oder verspritzt.

Es hat sich gezeigt, daß die Tretschicht nach der Behandlung mit dem Konservierungsmittel staubfrei bleibt. Auch bei sehr niedrigen Temperaturen in der Reithalle friert die Tretschicht nicht zu einer harten Masse und behält ihre elastischen Eigenschaften. Auch in der besonders stark belasteten Zone des Hufschlags kommt es nicht zur Verhärtung der Tretschicht. Die Tretschicht behält ihre Elastizität auch in dieser Zone. Es wird außerdem im Sommer nicht nur die Verrottung der Hobelspäne gebremst sondern auch die Entwicklung von lästigen Insekten, wie Flöhen oder Hautparasiten unterbunden. Es treten keine Entzündungen der Fesseln der Pferde auf. Es wurde keine hautreizende Wirkung der erfindungsgemäß konservierten Hobelspäne festgestellt.

Es besteht weiterhin die Möglichkeit, das Konservierungsmittel mit einer frischen Duftnote, z.B. "Fichtennadel" auszurüsten.

**Ansprüche**

1. Konservierungsmittel für Hobelspäne, enthaltend eine Mischung aus 1 bis 5 Gewichtsteilen einer anorganischen Borverbindung, 2 bis 7 Gewichtsteilen einer Alkoholverbindung und 1 bis 8 Gewichtsteilen einer wäßrigen Polymerdispersion.

2. Mittel nach Anspruch 1, enthaltend eine wasserlösliche Borverbindung, eine wasserlösliche Alkoholverbindung und eine mit Waser verdünnbare Polymerdispersion.

3. Verfahren zur Konservierung von Hobelspänen, dadurch gekennzeichnet, daß man die Hobelspäne mit einem Konservierungsmittel gemäß Anspruch 1 behandelt.

4. Verfahren nach Anspruch 3, dadurch gekennzeichnet, daß man ein Konservierungsmittel verwendet, das mit Wasser verdünnt worden ist.

## EINSCHLÄGIGE DOKUMENTE

EP 86109181.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 2 853 5?? (BORAX HOLDINGS) <br><br> * Ansprüche 1,6-11; Seite 8, Zeilen 14-17; Seite 9, Zeile 5; Seite 10, Zeile 25 - Seite 11, Zeile 11 * <br> -- | 1,2,4 | B 27 K 3/52 |
| X | GB - A - 1 132 715 (UNITED STATES BORAX) <br><br> * Ansprüche 1,6-12; Seite 2, Zeilen 55-94; Seite 3, Zeilen 3-11 * <br> -- | 1,2,4 | |
| X | US - A - 4 154 818 (KANADA) <br><br> * Ansprüche 1,13 * <br> -- | 1,2,4 | |
| X | DE - A - 2 003 506 (USM CORP.) <br><br> * Ansprüche 1-3,6 * <br> -- | 1 | **RECHERCHIERTE SACHGEBIETE (Int. Cl.4)** |
| X | AT - B - 352 991 (BASF) <br><br> * Anspruch; Seite 2, Zeilen 14, 15,31-40,46-48 * <br> -- | 1-4 | B 27 K |
| X | DE - B - 1 642 171 (DESOWAG) <br><br> * Ansprüche * <br> -- | 1 | |
| A | US - A - 3 305 298 (CHAPMAN) <br><br> * Ansprüche * <br> -- | 1,4 | |
| A | GB - A - 2 088 211 (WOOD SLIMP) <br><br> * Ansprüche * <br> ---- | 1,4 | |

Der vorliegende Recherchenbericht wurde für alle Patentansprüche erstellt.

| Recherchenort | Abschlußdatum der Recherche | Prüfer |
|---|---|---|
| WIEN | 30-09-1986 | SCHÄFER |